## Europäisches Patentamt
## European Patent Office
## Office européen des brevets

(19)

(11) Numéro de publication : **0 328 610 B1**

(12) ## FASCICULE DE BREVET EUROPEEN

(45) Date de publication du fascicule du brevet :
**27.11.91 Bulletin 91/48**

(51) Int. Cl.⁵ : **B26D 1/46, B26D 1/547, B28D 1/08**

(21) Numéro de dépôt : **88907344.1**

(22) Date de dépôt : **18.08.88**

(86) Numéro de dépôt international :
**PCT/FR88/00421**

(87) Numéro de publication internationale :
**WO 89/01395 23.02.89 Gazette 89/05**

(54) **PROCEDE DE TRONCONNAGE DE LINGOTS DE MATERIAUX DURS ET APPAREILLAGE DE MISE EN OEUVRE DE CE PROCEDE.**

(30) Priorité : **21.08.87 CH 3222/87**

(43) Date de publication de la demande :
**23.08.89 Bulletin 89/34**

(45) Mention de la délivrance du brevet :
**27.11.91 Bulletin 91/48**

(84) Etats contractants désignés :
**AT BE CH DE FR GB IT LI LU NL SE**

(56) Documents cités :
**FR-A- 2 330 510**
**FR-B- 2 254 948**

(56) Documents cités :
**FR-B- 2 254 949**
**US-A- 3 478 732**
**US-A- 3 525 324**
**US-A- 4 574 769**
**US-A- 4 640 259**

(73) Titulaire : **PHOTEC FRANCE S.A.**
**Chemin de Recrédoz**
**F-01220 Divonne-les-Bains (FR)**

(72) Inventeur : **Les inventeurs ont renoncé à leur désignation**

(74) Mandataire : **Moinas, Michel**
**Cabinet Michel Moinas 13 Chemin du Levant**
**F-01210 Ferney-Voltaire (FR)**

EP 0 328 610 B1

Jouve, 18, rue Saint-Denis, 75001 PARIS

## Description

La présente invention concerne un procédé de tronçonnage dans un lingot en un matériau dur, notamment dans un lingot de silicium, de plaquettes planes d'épaisseur constante, ainsi que l'appareillage pour la mise en oeuvre du procédé.

Le procédé le plus connu de tronçonnage ou découpe d'un matériau dur, et notamment d'un lingot de silicium, consiste à utiliser une poudre abrasive fixée sur un dispositif de sciage ou en suspension dans une solution liquide, huileuse ou aqueuse, et entraînée par le dispositif de sciage.

L'opération de tronçonnage peut être effectuée soit à l'aide d'un fil recouvert de particules d'un abrasif approprié, soit à l'aide d'un fil servant de véhicule à la solution liquide d'abrasif, les fils étant généralement animés d'un mouvement alternatif périodique par rapport au lingot à découper de manière à obtenir un mouvement de coupe comparable à un sciage. L'ensemble de la machine entraînant un tel fil est connu des spécialistes sous le vocable de "machine à fil" ou encore de "machine de découpe à fil" ; c'est par l'un de ces termes que cet ensemble sera désigné dans la suite de l'exposé.

Quel que soit le type de machine utilisé, le procédé actuel consiste à découper simultanément un lingot en une pluralité de plaquettes en l'appuyant sur une nappe de brins parallèles dont l'espacement est égal à l'épaisseur requise pour les plaquettes. Cette nappe est ordinairement créée en faisant passer le fil provenant d'une bobine débitrice dans les gorges ou rainures de rouleaux sensiblement parallèles, le fil étant ensuite recueilli sur une bobine réceptrice. Pour assurer un renouvellement incessant aux emplacements d'usinage, le fil est entraîné en translation permanente entre la bobine débitrice et le bobine réceptrice et si on lui imprime un mouvement alternatif, celui-ci est réalisé par la commande de l'un au moins des rouleaux de guidage dont la rotation est alors inversée à intervalles réguliers, le rôle des bobines débitrice et réceptrice étant alors inversé également. La rotation peut être inversée suivant un programme déterminé, et ceci à intervalles réguliers de façon à ce que le déplacement résultant soit toujours un déplacement dans la même direction.

Le fil est soumis à une tension mécanique constante qui est obtenue par déplacement de l'un des rouleaux au moins. Cette tension mécanique constante peut être obtenue par bobinage d'au moins deux fils sur un cabestan intermédiaire piloté par un moteur couple réglable par un potentiomètre. Le mouvement du fil se fait par dévidage et renvidage sur les bobines réceptrices et débitrices. Le système le plus courant utilise un trancanneur permettant au fil de se ranger sur la largeur du moyeu de la bobine.

Dans la plupart des machines à fil et quel que soit le nombre de rouleaux utilisés, le mouvement relatif du lingot par rapport à la nappe de brins de fil de découpe est généralement un mouvement vertical dirigé de haut en bas de manière à bénéficier de l'action du poids du lingot dans la pression exercée par celui-ci sur la nappe de brins : le dispositif de sciage étant fixe, le lingot se déplace donc verticalement de haut en bas. Il va de soi que l'enroulement du fil autour d'au moins deux rouleaux crée, en fait, deux nappes de brins, et, en conséquence, le lingot se trouve toujours découpé par la nappe de brins supérieure.

Ce procédé est utilisé notamment sur la machine à fil décrite dans l'exposé FR 2330510, mais il présente de nombreux inconvénients.

En effet, lors de la descente du lingot sur la nappe de fil et pendant l'opération de tronçonnage, ceux-ci sont soumis à diverses contraintes mécaniques. Ainsi, la nappe de fil subit une pression verticale dirigée de haut en bas et résultant de l'action du poids et du mouvement de descente du lingot. Le mouvement de descente du lingot engendre lui-même une réaction de la nappe de fil sur le lingot, cette réaction étant due à la tension du fil. De plus, le lingot est également soumis à des contraintes transversales provoquées notamment par le déplacement du fil. Or, la conception des machines actuelles rend difficile le contrôle de ces diverses contraintes, ce qui interdit pratiquement leur automatisation.

Par ailleurs, en ce qui concerne l'opération de tronçonnage elle-même, il n'est guère possible d'en surveiller le déroulement d'une manière continue et sûre, les sillons creusés dans le lingot par les brins de la nappe de fil, se trouvant partiellement cachés par le lingot et par son système de déplacement vertical.

Dans le cas de machines à fil utilisant un abrasif en suspension dans une solution liquide, une répartition correcte de la solution sur la zone active de la nappe de fil reste aléatoire puisque, en fait, la présence du lingot constitue un obstacle au passage du film de solution abrasive déposée sur la nappe. Pour cette même raison, une faible quantité de cette solution abrasive pénètre dans les sillons creusés dans le lingot. De plus, l'abrasif se trouvant seulement en contact de la portion inférieure du lingot, son action est très brève, son poids le faisant tomber rapidement dans un bac de récupération prévu à cet effet sous la nappe de fil inférieure.

Pour remédier notamment à ces derniers inconvénients, on connaît quelques machines pour lesquelles le sens du mouvement vertical du lingot a été inversé ; c'est le cas par exemple, de celle représentée dans l'exposé FR 2254948 et 2254949

Sur cette machine, en effet, le lingot à découper est placé à l'intérieur du dispositif de coupe et vient en appui sur la nappe supérieure de fil par un mouvement de montée de son support.

Un tel procédé nécessite un espace important à l'intérieur du dispositif de coupe de manière à laisser passer le lingot et son support. En conséquence, sa mise en oeuvre implique l'utilisation de rouleaux de grand diamètre et/ou au nombre au moins de trois pour faire circuler la nappe de fil, ce qui rend plus difficile le maintien en position parallèle des brins de la nappe supérieure.

Dans ce type de machine utilisé, le matériau éliminé par le tronçonnage forme avec l'abrasif et le liquide de refroidissement ou avec la solution abrasive une boue qui tombe sur la nappe de fil inférieure et fait obstacle au passage des fils dans les rainures des rouleaux et qui contribue également à l'usure du fil.

On connait par ailleurs des machines dans lesquelles le lingot, porté par un support, est placé à l'extérieur de l'organe de coupe sous la nappe inférieure et il est amené au contact de la nappe inférieure puis pressé sur elle pour le tronçonnage par un mouvement de translation rectiligne continu, ascendant et perpendiculaire au plan de la nappe de fil inférieure. C'est le cas, par exemple, de celles représentées dans les exposés US-A-4640259 et US-A-4574769.

Dans ce mode de réalisation, on distribue pendant l'opération de tronçonnage une solution ou suspension abrasive qui coopère avec le fil, le lingot étant partiellement ou totalement immergé dans celle-ci. On peut en particulier utiliser une buse calibrée, réglable en débit ou en position, qui peut être par exemple située de chaque côté du lingot à tronçonner. Ainsi, on va distribuer et renouveler la solution abrasive en quantité optimale, la pression aussi étant réglable et pouvant être rendue constante, notamment à l'aide d'un acumulateur de pression.

Un tel procédé de tronçonnage présente de nombreux avantages. En effet, quel que soit le type de machine à fil utilisé, il est possible de surveiller le déroulement de l'opération de tronçonnage, les sillons creusés par la nappe de fil étant suffisamment apparents. Le contrôle des contraintes mécaniques exercées sur le lingot est également facilité, des capteurs sensibles, de type piézo-électrique par exemple, portés par le support pouvant être mis directement et aisément au contact du lingot.

Dans ces conditions le procédé permet d'asservir l'organe de coupe, les corrections éventuelles dues à des contraintes détectées par les capteurs pouvant être répercutées automatiquement sur les appareils de commande à l'organe de coupe.

Il est alors possible de réaliser des économies de temps et, éventuellement, des économies de matière abrasive ou de fil, ce qui a une influence certaine sur le coût des plaques découpées.

Ce procédé présente également un avantage important lorsqu'il est appliqué à des machines à fil utilisant un abrasif en suspension dans une solution liquide huileuse-ou aqueuse. En effet, ce procédé permet de faire tomber directement la solution sur la zone active de la nappe de fil et, simultanément, sur la portion du lingot en cours de sciage. La solution peut donc être répartie automatiquement d'une manière plus correcte.

Par ailleurs, la boue abrasive engendrée par le tronçonnage est éliminée immédiatement par gravité et ne provoque donc l'usure ni du fil, ni des rouleaux.

Toutefois, on comprend aisément que, dans les machines dont le support du lingot effectue un mouvement de translation rectiligne continu vers la nappe de fil inférieur tel que décrites dans les documents US 4640259 et US 4574769 tout l'espace compris entre le sol et la nappe inférieur de fil est entièrement occupé par le dispositif de levée du support, que ce soit un dispositif à vis sans fin ou un dispositif à vérin hydraulique. Or, lors de la conception de machine plus compacte, il peut justement être souhaitable d'installer d'autres organes dans cet emplacement.

Le but de la présente invention est de remédier à ce dernier inconvénient cité.

En effet la présente invention concerne un procédé de tronçonnage dans un lingot de silicium, de plaquettes planes d'épaisseur constante ; le tronçonnage étant effectué par des moyens comportant essentiellement un organe de coupe constitué d'un fil métallique mobile enroulé autour d'au moins deux rouleaux pour former au moins deux nappes superposées de brins parallèles et animé éventuellement d'un mouvement de va-et-vient entre une bobine débitrice et une bobine réceptrice. Le lingot, porté par un support, est placé à l'extérieur de l'organe de coupe sous la nappe inférieure et il est amené au contact de la nappe puis pressé sur elle pour le tronçonnage par un mouvement de translation curviligne relatif continu et ascendant du support par rapport à la nappe.

Avantageusement le mouvement de translation ascendant et continu décrit par le lingot et son support lors de son appui sur la nappe de fil inférieure et pendant l'opération de tronçonnage est un mouvement de translation circulaire et oscillant.

Dans ce cas, l'attaque du lingot par la nappe de fil est moins brutale et diminue les risques de formation d'éclats ou d'amorces de fêlures au bord des sillons creusés et permet une meilleure distribution de l'abrasif.

Un des inconvénients des machines existantes est lié au porte-à-faux du lingot, d'autant plus accentué que le support du lingot est translaté par un système à crémaillère ou vis écrou situé le plus souvent en arrière du centre de gravité du lingot. Cet agencement introduit, dans certains cas de découpe, des variations de réaction et de contre-réactions parasites de type flexion, donnant des stries et du bombé sur le matériau à découper. Selon l'invention, la poussée du lingot est exercée par une disposition telle que la poussée reste exactement dans l'axe du déplacement du lingot ou bloc de matériau à découper.

Cette disposition permet d'avoir un état de surface quasiment parfait libre de stries et avec une couche perturbée très faible. Elle permet aussi de diminuer le bombé des plaquettes et de mieux réguler les efforts à faible vitesse. Elle correspond à un besoin d'un meilleur état de surface et permet d'avoir des application dans le domaine de la microélectronique et permet d'usiner par exemple du silicium et des composés (III), (V). Il n'est pas nécessaire d'effectuer un rodage et le polissage peut être fait directement.

On sait que le polissage détruit la planéité. Avec cette disposition, on peut obtenir des épaisseurs inférieures à 8 microns sans rechercher à optimiser les paramètres de polissage, ceci jusqu'à des diamètres de 200 mm.

Selon l'invention, on peut découper des matériaux nécessitant une légère désorientation par rapport au plan de coupe. C'est le cas par exemple de matériaux comme le GAAS, INP, GGG, le silicium orienté (III).

Cette désorientation peut se faire dans deux plans le plus souvent orthogonaux et l'ensemble permet de positionner la pièce de découpe et son support à l'extérieur de la machine en utilisant soit les rayons X ou l'usage des figures de corrosion des matériaux utilisés. L'ensemble est ensuite repositionné sur la machine et prêt à être découpé suivant un procédé qui tient compte du nouveau chemin de l'abrasif et du fil.

L'invention permet d'éviter une limitation mécanique au nombre de pièces à découper. En effet normalement on ne peut découper selon les épaisseurs requises que jusqu'à des longueurs de 300 mm, mais l'industrie électronique par exemple, ou les céramiques utilisent des longueurs initialement plus importantes.

L'invention permet de découper des lingots plus longs tout en compensant astucieusement les efforts des fils sur les guide-fils. Pour ce faire, l'assemblage des guide-fils est positionné sur les armatures de la machine qui se trouve ainsi ouverte de chaque côté laissant passer le lingot avec des longueurs jusqu'à 400 voire 800 mm. Les efforts sur les rouleaux sont compensés et supportés par le bâti lui-même. Deux parois du bâti servent alors de support des axes de guide-fil afin d'éliminer le problème de porte à faux de la machine initiale. Le lingot glisse latéralement et, une fois les 500 ou 800 plaques coupées, la sortie de la portion coupée se fait par découpe supplémentaire du lingot coupé. L'alimentation peut se faire en continu.

La présente invention concerne également un appareillage pour la mise en oeuvre du procédé de tronçonnage, appareillage comportant, sur un bâti, d'une part, un dispositif de coupe constitué d'un fil métallique mobile enroulé autour d'au moins deux rouleaux pour former au moins deux nappes superposées de brins parallèles et animé éventuellement d'un mouvement de va-et-vient entre une bobine débitrice et une bobine réceptrice et, d'autre part, un support destiné à maintenir de façon rigide le lingot à tronçonner durant son déplacement. Le support est agencé extérieurement au dispositif de coupe, il est placé sous la nappe inférieure et il est solidaire d'un dispositif de translation curviligne formé d'un balancier portant deux bras tournant autour d'un pivot excentré par rapport au dispositif de coupe, le support étant disposé à l'extrémité de l'un des bras et l'autre bras étant solidaire de moyens de contrôle et de déplacement du balancier.

Un tel appareillage permet de contrôler aisément la coupe du lingot puisque l'attaque de celui-ci par la nappe de fil a lieu à sa partie supérieure, c'est-à-dire dans la partie visible.

De plus, des capteurs ou détecteurs de contraintes sont fixés sur le support et appliqués contre le lingot de manière à détecter toutes les contraintes que peut subir ce dernier et à y remédier automatiquement par une transmission des informations recueillies aux organes de commande du dispositif de coupe et du support.

Une variante de l'invention consiste à faire déplacer alternativement la bobine, évitant au fil un déplacement et surtout évitant un angle entre la roulette de tronçonnage et la bobine alors que, dans le cas du tronçonnage simple le fil est soumis à une courbure présentant des risques importants de mauvais rangement.

Une autre variante de l'invention consiste à avoir un cabestan avec une partie oblique et un renvoi sur des roulettes folles décalées par rapport au plan vertical évitant ainsi au fil de rouler sur lui-même et de se vriller et de diminuer considérablement son usure et de contrôler efficacement sa tension.

L'épaisseur des plaquettes est donnée par le pas des guide-fils. La tolérance sur le pas est donc primordiale et on peut par exemple obtenir des tolérances de l'ordre de 1 micron avec du matériau non dur. En effet, si la précision de l'usinage est meilleure sur des matériaux métalliques, il en résulte une usure par le fil et l'abrasif que l'invention réduit par l'utilisation d'un matériau spécifique par exemple de type polyuréthane spécialement traité et ayant une dureté entre 90 et 96 shore A.

On conçoit que l'efficacité de la coupe dépende du transfert de la solution abrasive et sur le matériau à découper. Selon une variante, on distribue à l'aide d'une buse mobile en fonction de la découpe ce qui permet ainsi non seulement de suivre le profil de la pièce à découper grâce par exemple à un ressort de rappel ou tout autre système mécanique mobile. La forme de cette buse étant telle qu'elle garantit la présence de l'abrasif en permanence au contact du lingot et du fil sans toutefois avoir l'inconvénient d'augmenter la voie.

Cette distribution d'abrasif dépend aussi du matériau à découper et selon l'invention on peut tourner de 90° l'ensemble des guide-fils afin de changer la distribution d'abrasif. C'est par exemple le cas de la coupe de matériaux plus durs que le silicium (GGG par exemple) où l'abrasif peut suivre le fil et avoir une activité conjointe supérieure.

Avantageusement, des moyens de calcul sont prévus qui permettent de programmer les opérations de tronçonnage et l'appareillage correspondant, en temps réel ou en simulation. On peut aussi faire dépendre la vitesse de défilement du fil, les paramètres gouvernant la distribution éventuelle de l'abrasif ou la pression du lingot sur la nappe de fil, de données telles que la surface à découper, la dureté du matériau, les variations d'effort à exercer indiqué par exemple par des jauges de contrainte, ou encore des puissances du couple moteur.

La description sera mieux comprise en relation avec le dessin annexé donné à titre d'exemple non limitatif. Dans ce dessin :

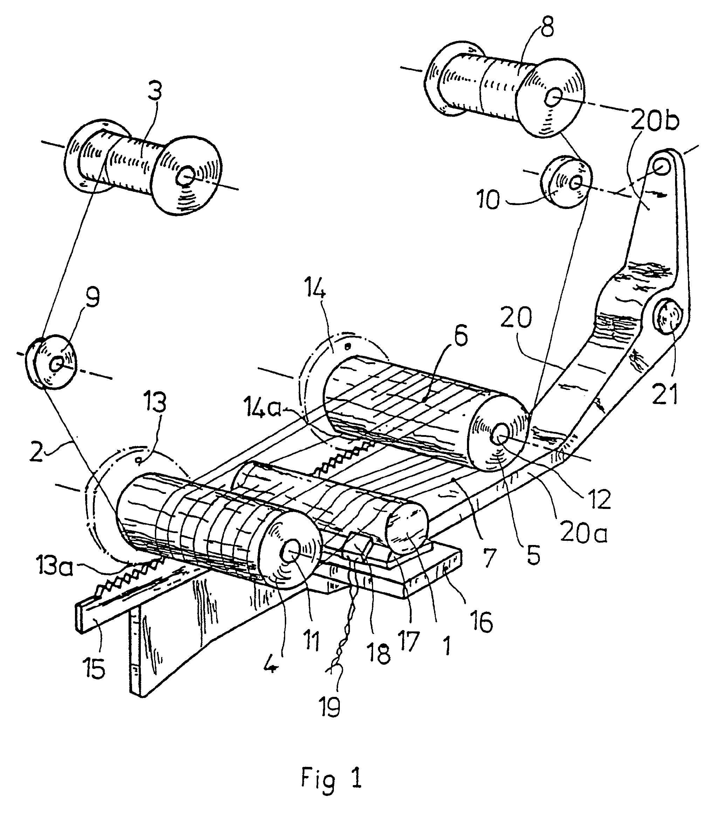

La figure 1 représente schématiquement un appareillage pour la mise en oeuvre du procédé selon l'invention correspondant au cas où on imprime au support et au lingot un mouvement ascendant sensiblement circulaire ;

La figure 2 est une vue de profil d'un montage permettant la découpe du lingot sur toute sa longueur.

La figure 3 est une vue en coupe de la figure 2 selon l'axe F.

Il est à noter, sur le dessin, que les dimensions ne sont pas proportionnées, ceci afin de rendre certains éléments du dessin plus clairs.

Conformément à l'invention, la machine est constituée essentiellement d'un dispositif de coupe du lingot 1 à tronçonner et d'un ensemble de levage et de guidage du lingot, le dispositif de coupe et l'ensemble de levage et de guidage étant montés sur un même bâti non représenté sur la figure.

Pour une meilleure compréhension du dessin, les moteurs d'entraînement des divers éléments tournants n'ont pas été figurés, mais il va de soi que, à chacun de ces éléments, il y a lieu d'associer un moteur dont la puissance est choisie en fonction de sa destination.

Le dispositif de coupe comporte un fil métallique 2 amené d'une bobine débitrice 3 et enroulé autour de deux rouleaux 4 et 5 en un certain nombre de spires de manière à créer deux nappes de brins parallèles 6 et 7 avant d'aboutir à une bobine réceptrice 8. Des moyens de commande sont prévus pour que, à des temps donnés et d'une manière régulière, la bobine débitrice 3 devienne une bobine réceptrice et que la bobine réceptrice 8 devienne débitrice.

Pour faciliter l'enroulement du fil 2 sur les bobines 3 et 8 et autour des rouleaux 4 et 5, le fil passe par deux poulies folles 9 et 10.

La distance séparant deux brins parallèles des nappes 6 et 7 est égale à l'épaisseur requise pour les plaquettes à découper dans le lingot.

Les rouleaux 4 et 5 sont par exemple montés dans un même plan horizontal sur deux arbres parallèles 11 et 12. Pour modifier la tension du fil métallique 2, les rouleaux peuvent se déplacer l'un par rapport à l'autre dans ce même plan horizontal de manière à modifier leur entre-axe. Pour ce faire, sur les arbres 11 et 12 sont montés libres deux supports 13 et 14 comportant des secteurs dentés 13a, 14a en prise avec une crémaillère 15 portée par le bâti et servant de guide aux secteurs dentés 13a et 14a. Le mouvement de translation de ces derniers doit s'opérer dans deux directions diamétralement opposées ; c'est pourquoi il sera avantageux de rendre les supports 13 et 14 solidaires d'un dispositif de commande comportant, par exemple, deux vis sans fin a pas inversé entraînées par un moteur approprié.

Selon le type de machine utilisé, le fil métallique 2 peut être un fil simple ou recouvert de particules diamantée, ou un fil recouvert d'un alliage, par exemple cuivre/zinc. Il y a lieu alors de prévoir des moyens de distribution sur la nappe de fil 7 à l'endroit des rouleaux d'une solution liquide d'abrasif.

L'ensemble de levage et de guidage portant le lingot 1 est constitué d'un support 16, en forme de plateau par exemple, sur lequel est collé le lingot 1 à l'aide d'une substance adhésive 17, notamment un mélange de cire. Sur ce même support 16 sont fixés les capteurs 18 plaqués contre le lingot 1 et destinés à détecter les contraintes subies par ce dernier de manière à faire réagir en conséquence les divers éléments de coupe auxquels ils sont reliés électriquement par l'intermédiaire de fils 19.

Dans la forme de mise en oeuvre choisie pour la figure, le support 16 est porté par l'extrémité d'un bras 20a d'un balancier 20 pivotant autour d'un axe 21 sensiblement parallèle à l'axe des arbres 11 et 12 des rouleaux 4 et 5. L'autre bras 20b, relié à un ensemble cylindre-piston ou du type moteur-vis-écrou non représenté sur la figure permet de commander et de contrôler le déplacement du support et du lingot.

Pour tronçonner le lingot 1, on amène ce dernier au contact de la nappe de fil inférieure 7 en faisant pivoter le balancier 20 autour de l'axe 21 puis on poursuit ce mouvement de rotation d'une manière lente et régulière, la vitesse de rotation dudit balancier et celle du fil 2 étant déterminées à partir des informations données par les capteurs 18 et par les appareils de contrôle commandés par le bras 20b du balancier 20.

Dans une autre variante non représentée, le lingot est collé sur un dispositif pouvant osciller autour d'un axe supporté à chaque extrémité par une bride. Le dispositif est relié à un bras articulé manoeuvré à une extrémité par une came montée au bout d'un autre moteur électrique.

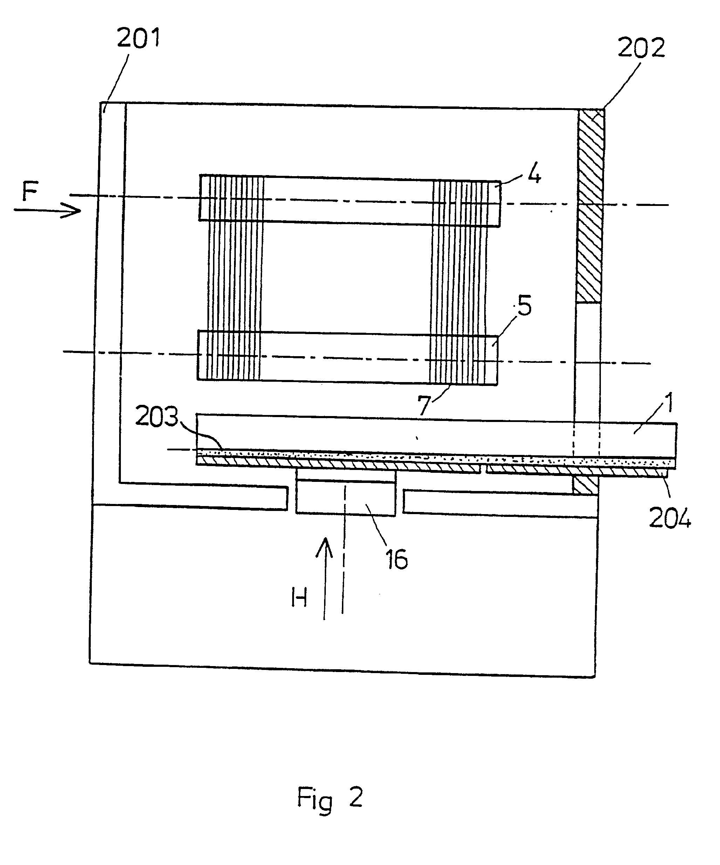

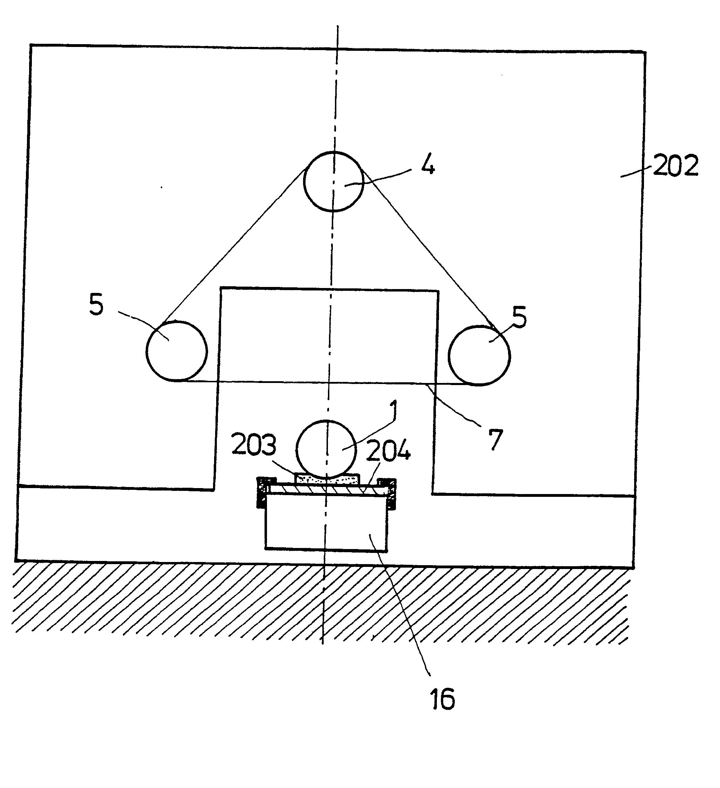

Le montage représenté dans les figures 2 et 3 permet de découper le lingot sur toute sa longueur, permettant l'indexage de celui-ci et l'évacuation des parties découpées, ainsi que le repositionnement du lingot pour un nouveau tronçonnage. Un bâti comprenant une paroi avant 201 et une paroi arrière 202, ainsi que des parois latérales, reçoit le support 16 qui reçoit à son tour le lingot 1 par l'intermédiaire de deux pièces intermédiaires de positionnement 203 et 204.

Comme on le voit plus particulièrement sur la figure 2, le lingot 1 traverse les parois 201 et 202 et est poussé vers le haut selon H pour venir en contact avec la nappe inférieure 7 montée sur trois rouleaux supérieur 4 et inférieurs 5. Le lingot 1 est collé sur la pièce intermédiaire 203 et ce montage permet d'indexer le lingot 1 et de le découper sur toute sa longueur, tout en assurant l'évacuation des parties découpées et le reconditionnement du lingot 1 pour une nouvelle découpe.

## Revendications

1. Procédé de tronçonnage dans un lingot (1) en un matériau dur, notamment dans un lingot de silicium, de plaquettes planes d'épaisseur constante, le tronçonnage étant effectué par des moyens comportant essentiellement un organe de coupe constitué d'un fil métallique mobile (2) enroulé autour d'au moins deux rouleaux (4, 5) pour former au moins deux nappes superposées (6, 7) de brins parallèles et animé éventuellement d'un mouvement de va-et-vient entre une bobine débitrice (3) et une bobine réceptrice (8), le lingot (1) étant porté par un support (16) placé à l'extérieur de l'organe de coupe sous la nappe inférieure (7) et étant amené au contact de la nappe (7), puis pressé sur elle pour le tronçonnage par un mouvement de translation relatif continu et ascendant du support (16) par rapport à la nappe (7), caractérisé en ce que le mouvement ascendant est curviligne.

2. Procédé de tronçonnage selon la revendication 1, caractérisé en ce que le fil métallique mobile (2) coopère avec une solution ou suspension abrasive dans laquelle le lingot (1) est immergé partiellement ou totalement.

3. Procédé de tronçonnage selon la revendication 1, caractérisé en ce que le mouvement curviligne ascendant et continu décrit par le lingot (1) et son support (16) est un mouvement de translation circulaire.

4. Appareillage de mise en oeuvre du procédé selon l'une quelconque des revendication 1 à 3, et comportant sur un bâti, d'une part, un dispositif de coupe constitué d'un fil métallique mobile (2) enroulé autour d'au moins deux rouleaux (4, 5) pour former au moins deux nappes superposées de brins parallèles (6, 7) et animé éventuellement d'un mouvement de va-et-vient entre une bobine débitrice (3) et une bobine réceptrice (8) et, d'autre part, un support (16) destiné à maintenir de façon rigide le lingot (1) à tronçonner durant son déplacement, le support (16) étant agencé extérieurement au dispositif de coupe sous la nappe inférieure (7) caractérisé en ce que le support est solidaire d'un dispositif de translation curviligne formé d'un balancier (20) portant deux bras (20a, 20b) tournant autour d'un pivot (21) excentré par rapport au dispositif de coupe, le support étant disposé à l'extrémité de l'un des bras (20a) et l'autre bras (20b) étant solidaire de moyens de contrôle et de déplacement du balancier (20).

5. Appareillage selon la revendication 4, caractérisé en ce qu'il comprend des moyens de calcul permettant sa programmation pour adapter la vitesse de défilement du fil, la distribution d'abrasif et la pression du lingot sur la nappe inférieure en fonction de la surface à découper, de la dureté du matériau et des variations d'effort à exercer pour le tronçonnage.

6. Appareillage selon la revendication 4, caractérisé en ce que le lingot (1) le traverse de part en part, par des ouvertures ménagées dans ses parois (201, 202) de façon à pouvoir être tronçonné sur la totalité de sa longueur.

## Patentansprüche

1. Verfahren zur Zerteilung eines Barrens (1) aus einem harten Material, insbesondere eines Barrens aus Silicium, in ebene Plättchen mit einer konstanten Stärke, wobei diese Zerteilung mittels eines Verfahrens durchgeführt wird, das im wesentlichen eine Schneideeinrichtung umfaßt, die aus einem beweglichen Metallfaden (2) besteht, welcher mindestens zwei Rollen (4, 5) umläuft und mindestens zwei übereinanderliegende Ebenen (6, 7) von parallelen Schnüren bildet, die gegebenenfalls durch eine hin- und hergehende Bewegung zwischen einer Freigabespule (3) und einer Aufnahmespule (8) geführt werden, während der Barren (1) von einem Gestell (16) getragen ist, das außerhalb der Schneideeinrichtung unterhalb der unteren Ebene (7) liegt und in Kontakt mit der Ebene (7) geführt wird, worauf er auf diese Fläche für die Durchführung der Zerteilung gedrückt wird durch eine kontinuierliche translatorische Relativbewegung sowie eine ansteigende Bewegung des Gestells (16), bezogen auf die Ebene (7), dadurch gekennzeichnet, daß die ansteigende Bewegung gekrümmt ist.

2. Verfahren zur Zerteilung gemäß Anspruch 1, dadurch gekennzeichnet, daß der bewegliche Metallfaden (2) mit einer Lösung oder einer Suspension eines Schleifmittels zusammenwirkt, in welche der Barren (1) teilweise oder ganz eingetaucht ist.

3. Verfahren zur Zerteilung gemäß Anspruch 1, dadurch gekennzeichnet, daß die gekrümmte, ansteigende und kontinuierliche Bewegung, die von dem Barren (1) und dessen Gestell (16) ausgeführt wird, eine translatorische Kreisbewegung ist.

4. Vorrichtung zur Durchführung des Verfahrens nach einem der Ansprüche 1 bis 3 mit einem Rahmen, auf welchem einerseits eine Schneideeinrichtung getragen ist, bestehend aus einem beweglichen Metallfaden (2), der mindestens zwei Rollen (4, 5) umläuft, um mindestens zwei übereinanderliegende Ebenen von parallelen Schnüren (6, 7) zu bilden, der gegebenenfalls von einer hin- und hergehenden Bewegung zwischen einer Freigabespule (3) und einer Aufnahmespule (8) geführt wird, und andererseits ein Gestell (16) angeordnet ist, um den zu zerteilenden Barren (1) während seiner Verschiebung festzuhalten, wobei das Gestell (16) außerhalb der Schneideeinrichtung unterhalb der unteren Ebene (7) angeordnet ist, dadurch gekennzeichnet, daß das Gestell Bestandteil einer gekrümmten Übertragungseinrichtung ist, die einen Schwinghebel (20) umfaßt, welcher zwei Arme (20a, 20b) trägt, die sich um eine Schwenkachse (21) drehen, die exzentrisch zur Schneideeinrichtung angeordnet ist, wobei das Gestell am äußeren Ende eines der Arme (20a) angeordnet ist, während der andere Arm (20b) mit Steuer- und Verstelleinrichtungen des Schwinghebels (20) in Verbindung steht.

5. Vorrichtung nach Anspruch 4, dadurch gekennzeichnet, daß eine Recheneinrichtung vorgesehen ist, zur Durchführung einer Programmierung, unter Anpassung der Abwickelgeschwindigkeit des Fadens, der Verteilung des Schleifmittels und des Druckes des Barrens auf die untere Ebene, in bezug auf die einzuschneidende Oberfläche, an die Härte des Materials und die Änderung des für die Zerteilung aufzubringenden Kraftaufwandes.

6. Vorrichtung nach Anspruch 4, dadurch gekennzeichnet, daß der Barren sie vollständig durchquert durch Öffnungen, die an ihren Seiten (201, 202) vorgesehen sind, derart, daß der Barren in seiner ganzen Länge zerteilbar ist.

## Claims

1. Process for cutting from a bar (1) of a hard material, particularly from a bar of silicon, of flat plates of constant thickness, the cutting being performed by means comprising essentially a cutting element consisting of a movable metal wire (2) wound around at least two rollers (4, 5) to form at least two superimposed layers (6, 7) of parallel strands and optionally driven with a to-and-fro movement between a feel spool (3) and a take-up spool (8), the bar (1) being carried by a support (16) placed outside the cutting element under the lower layer (7) and being brought into contact with the layer (7), then pressed onto it for the cutting operation by a continuous and rising relative translation movement of the support (16) in relation to the layer (7), process characterised in that the rising movement is curvilinear.

2. Cutting process according to claim 1, characterised in that the movable metal wire (2) co-operates with an abrasive solution or suspension in which the bar (1) is partially or totally immersed.

3. Cutting process according to claim 4, characterised in that the rising and continuous translation movement described by the bar (1) and its support (16) is a circular movement.

4. Apparatus for implementing the process according to any of claims 1 to 5, and comprising on a frame, on the one hand, a cutting device consisting of a movable metal wire (2) wound around at least two rollers (4, 5) to form at least two superimposed layers of parallel strands (6, 7) and optionally driven in a to-and-fro movement between a feel spool (3) and a take-up spool (8) and, on the other hand, a support (16) adapted so as rigidly to hold the bar (1) to be cut during its displacement, the support (16) being arranged outside the cutting device, characterised in that the support is securely attached to a device for curvilinear translation formed by a rocker (20) bearing two arms (20a, 20b) rotating avout a pivot (21) off-centre in relation to the cutting device, the support being arranged at the end of one of the arms (20a) and the other arm (20b) being securely attached to means for monitoring and for displacement of the rocker (20).

5. Apparatus according to claim 4, characterised in that it comprises means of computation permitting its programming to adapt the wire speed, the distribution of abrasive and the pressure of the bar on the lower layer depending on the area to be cut, on the hardness of the material and on variations of force to be exerted for the cutting operation.

6. Apparatus according to claim 4, characterised in that the bar (1) passes through it from one side to the other, through openings made in its walls (201, 202) so as to be able to be cut along the entirety of its length.

Fig 1

Fig 2